# EUROPÄISCHE PATENTANMELDUNG

(11) **EP 4 836 214 A2**
(43) Veröffentlichungstag der Anmeldung: **04.11.2026**
(21) Anmeldenummer: 26203941.5
(22) Anmeldetag: 03.08.2021
(51) Int. Cl.: H02G 11/00

(54) **LEITUNGSFÜHRUNGSEINRICHTUNG FÜR HÄNGENDE ANWENDUNGEN, INSBESONDERE BOHRANLAGEN, BOHRGERÄTE ODER DGL**

(30) Priorität: 03.08.2020 DE 202020104482 U
(62) Dokumentnummer(n) der früheren Anmeldung(en) nach Art. 76 EPÜ: 21754979.9 / 4 189 795
(71) Anmelder: igus SE & Co. KG, 51147 Köln (DE)
(72) Erfinder: Hermey, Andreas, 53773 Hennef (DE); Howold, Philip, 50226 Frechen (DE); Schmidt, Christoph, 53783 Eitorf (DE); Schneebeck, Tim, 47058 Duisburg (DE); Schultes, Thilo Konrad, 51143 Koln (DE)
(74) Vertreter: Lippert Stachow Patentanwälte Rechtsanwälte

(57) **Zusammenfassung**

Die Erfindung betrifft eine Leitungsführungseinrichtung (60), insbesondere für hängende Anwendungen, umfassend
- einen zugfesten, flexiblen Tragstrang (11), und
- am Tragstrang (11) angeordnete zueinander räumlich auslenkbare Körper;
wobei einige Körper als Führungskörper (14) ausgeführt sind, welche jeweils einen Zentralteil (15A) mit Befestigungsvorrichtung (18) zum Befestigen am Tragstrang (11), sowie einen Außenteil (15B) mit mindestens einem Umfangselement (17) aufweisen.

In einem Längsabschnitt der Leitungsführungseinrichtung zwischen jeweils zwei Führungskörpern (14) ist erfindungsgemäß mindestens ein Abstandskörper (70) am Tragstrang (11) vorgesehen, der von den Führungskörpern (14) verschieden gestaltet ist, wobei in dem Längsabschnitt jeder n-te Körper, mit n ≥ 2, als Führungskörper (14) ausgeführt ist. Jeder Abstandskörper (70) verbindet zwei angrenzende Körper räumlich auslenkbar und gelenkig. Jeder Abstandskörper (70) weist zwei stirnseitig gegenüberliegende Gelenkbereiche (76A, 76B) auf, welche zu entsprechenden Gelenkbereichen (26A, 26B) der Zentralteile (15A) der Führungskörper (14) korrespondierend ausgeführt sind.

## Beschreibung

Die Erfindung betrifft allgemein eine Vorrichtung zur dynamischen Führung von mehreren Versorgungsleitungen, wie z.B. Kabeln, Schläuchen oder dgl., nachfolgend als Leitungsführungseinrichtung bezeichnet, insbesondere für besonders hohe Zugkräfte wie z.B. in hängenden Anwendungen in denen die Leitungsführungseinrichtung eine langen frei hängenden Abschnitt tragen soll, wie z.B. in einer Bohranlage oder dgl., beispielsweise wenn die Leitungsführungseinrichtung mit zwei herabhängenden Abschnitten und einer Schleife dazwischen angeordnet ist.

Die Erfindung betrifft speziell eine Leitungsführungseinrichtung zur Führung von mehreren Leitungen, umfassend einen zugfesten, flexiblen Tragstrang, insbesondere ein Seil oder eine Kette, der sich über die Länge der Leitungsführungseinrichtung erstreckt und eine Anzahl in Längsrichtung des Tragstrangs an diesem angeordnete Führungskörper, wobei benachbarte Führungskörper zueinander räumlich auslenkbar sind. Hierbei haben zumindest einige Führungskörper jeweils einen Zentralteil bzw. Zentralkörper mit einer Befestigungsvorrichtung zum Befestigen des Führungskörpers am Tragstrang, sowie einen Außenteil mit mindestens einem Umfangselement, welches einen Aufnahmebereich für Leitungen nach Außen begrenzt und damit eine oder mehrere der Leitungen geführten am Tragstrang hält.

Eine solche gattungsgemäße Leitungsführungseinrichtung mit Tragstrang ist bereits aus der WO 2019/243377 A1 vorbekannt. Eine vergleichbare Leitungsführungseinrichtung wurde weiterhin in der WO 2019/234090 A1 vorgeschlagen.

Diese gattungsgemäßen Leitungsführungseinrichtung können danke des zentralen Tragstrangs sehr hohe Zugkräfte aufnehmen, ohne dass diese über die einzelnen Führungskörper übertragen werden müssen. So können unter anderem Anwendungen mit vergleichsweise langen freihängenden Abschnitten, z.B. deutlich <10m, realisiert werden. Gattungsgemäße Leitungsführungseinrichtung können daher insbesondere in Bohranlagen (offshore/on-shore), oder im Tiefbau z.B. an einem Bohrgerät, und auch z.B. zur Landstromversorgung von Schiffen eingesetzt werden.

Es hat sich jedoch gezeigt, dass die bekannten Bauweisen, z.B. gemäß WO 2019/243377 A1 oder WO 2019/234090 A1 nur begrenzt robust sind gegen radial nach innen gerichtet Kräfte, welche z.B. Auftreten, wenn die Leitungsführungseinrichtung über eine Umlenkrolle umgelenkt werden soll oder anhand einer Trommel auf- oder abgespult werden soll. Dabei können die Führungskörper bedingt z.B. durch hohe Gewichtskraft ausgehend von einem langen, freihängenden Abschnitt, in Radialrichtung verformt werden, was zu einer unerwünschten Querbelastung der Leitungen bis hin zur dauerhaften Verformung führen kann.

Gegenüber dem vorstehenden Stand der Technik besteht eine erste Aufgabe der Erfindung darin, eine gattungsgemäße Leitungsführungseinrichtung so weiterzubilden, dass die Führungskörper höheren Querkräften, insbesondere radial nach innen gerichteten Querkräften standhalten kann.

Eine weitere, unabhängige zweite Aufgabe besteht darin, bei gattungsgemäßen Leitungsführungseinrichtungen, insbesondere solchen mit größeren Durchmessern, einen reduzierten vordefinierten Biegeradius bzw. Krümmungsradius der Umlenk-Schleife bzw. des Umlenkbereichs zu ermöglichen.

### ERSTER ASPEKT

Diese erste Aufgabe wird gemäß einem ersten Aspekt gelöst durch eine Leitungsführungseinrichtung nach Anspruch 1 bzw. durch einen hierfür gestalteten Führungskörper nach Anspruch 16.

Diese erste Aufgabe kann bereits dadurch gelöst werden, dass bei auf Querbelastung anfälligen Führungskörpern jeweils mindestens drei radiale Stege am Zentralteil bzw. Zentralkörper vorgesehen sind und den Außenteil halten bzw. den Außenteil tragen und in Radialrichtung stützen. Im Vergleich zu den eingangs genannten vorbekannten Lösungen, bei welchen zur Maximierung des Aufnahmeraums lediglich zwei radiale Stege vorgesehen sind, können dadurch auch in ungestützten Bereichen zwischen den Stegen höhere nach innen gerichtete Radialkräfte aufgefangen werden, ohne dass es zur Verformung des Außenteils, insbesondere des oder der Umfangselemente kommt. Durch erhöhte Anzahl radialer Stege können Radialkräfte besser abgefangen und auf den mittigen Zentralteil abgeleitet werden.

Eine höhere Anzahl radialer Stege erlaubt zudem eine strukturierte Innenaufteilung des Aufnahmeraums für die Leitungen, sodass diese einen definierten Verlauf haben und geringerem Verschleiß durch Relativbewegung zueinander ausgesetzt sind. Eine Aufteilung mit mindestens drei getrennten Kammern d.h. mindestens drei Stegen hat ist auch insoweit vorteilhaft.

Bevorzugt werden dementsprechend mindestens vier radiale Stege am Zentralteil vorgesehen, welchen den Außenteil tragen bzw. stützen.

Je nach gewünschtem freiem Durchmesser des Aufnahmebereichs und den zu erwartenden Kräften werden können auch fünf oder mehr radiale Stege am Zentralteil vorgesehen sein, um den Außenteil zu tragen bzw. zu stützen und/oder eine bessere Innenaufteilung zu erzielen.

Jeder Steg trägt und stützt dabei jeweils einen Bereich eines Umfangselements, insbesondere falls genau ein umlaufendes

Umfangselement vorgesehen wird, oder, je nach Anzahl vorgesehener Umfangselemente, ggf. auch endseitig zwei separate Umfangselemente.

Die radialen Stege wirken ähnlich wie Speichen und haben eine Haupterstreckung in radialer Richtung in Bezug auf die Mittelachse entlang welcher der Tragstrang durch den Zentralteil geführt ist, d.h. liegen auch radial zur Längsrichtung des Tragstrangs. Die die radialen Stege sind vorzugsweise in Umfangsrichtung gleichverteilt um diese Mittelachse angeordnet, d.h. mit im Wesentlichen gleichem Winkelmaß bzw. Bogenmaß zwischen je zwei umfänglich benachbarten radialen Stegen.

In einer bevorzugten, einfach zu wartenden Gestaltung ist das mindestens eine Umfangselement lösbar bzw. abnehmbar mit mindestens einem der radialen Stege verbunden. So können einzelne Leitungen bei Bedarf mit geringem Zeitaufwand ausgetauscht werden. Es kann zur werkzeugfrei lösbaren Verbindung vorzugweise einen Endbereich, insbesondere einen Endbereich mit einem Rastelement, aufweisen. Besonders bevorzugt kann z.B. eine hintergreifende Verrastung zwischen dem Endbereich des Umfangselements und dem entsprechenden Steg vorgesehen sein. Der rastende Hintergriff kann dabei in Radial-, Axial- und/oder Umfangsrichtung erfolgen.

In einer Ausführungsform ist vorgesehen, dass zumindest ein radialer Steg einen radialen Abschnitt sowie zumindest einen im Wesentlichen in Umfangsrichtung vorstehenden Vorsprung zum Verbinden mit dem mindestens einem Umfangselement umfasst. Es kann vorzugsweise vorgesehen sein, dass der zumindest eine Vorsprung ein Rastelement zum Verrasten mit dem Umfangselement aufweist und/oder einstückig mit dem radialen Abschnitt ausgeführt ist.

Vorteilhaft kann vorgesehen sein, dass das Umfangselement im montierten Zustand mit dem lösbaren Endbereich in Umfangrichtung am entsprechenden radialen Steg abgestützt ist, um eine günstigere Krafteinleitung bzw. robustere, stoßfeste Bauweise zu erzielen.

Der Zentralteil bildet eine axiale Durchgangsöffnung für den Tragstrang und ist bevorzugt mehrteilig ausgeführt ist. Hierbei kann der Zentralteil zum Befestigen am Tragstrang mindestens zwei oder genau zwei Bauteile, insbesondere Klemmschalen, aufweisen. Eine mehrteilige Bauweise ist vorteilhaft zur form- und/oder kraftschlüssigen Befestigung am Tragstrang, der z.B. als Seil, insbesondere als Kunstsoff-Seil, oder auch als Gliederkette, z.B. aus Stahlgliedern, ausgeführt sein kann. Die einzelnen Bauteile begrenzen dabei die Durchgangsöffnung und können jeweils am Tragstrang form- und oder kraftschlüssig anliegen bzw. angreifen.

Die Befestigungsvorrichtung des Zentralteils zum Befestigen des Führungskörpers am Tragstrang ermöglicht insbesondere eine in Längsrichtung des Tragstrangs feste, d.h. axial ortsfeste Befestigung des betrachteten Führungskörpers.

Der Tragstrang trägt einen wesentlichen Teil des Gewichts und entlastet die Leitungen von Zugkräften, ähnlich der inneren Seele eines Seils. Der Tragstrang ist so flexibel, dass er die Auslenkung der Führungskörper zueinander nicht beeinträchtigt. Die Führungskörper halten die Leitungen im Aufnahmebereich d.h. relativ zum Zentralteil und damit zumindest in Radialrichtung gegenüber dem Tragstrang fest.

Bei mehrteiliger Bauweise des Zentralbereichs bzw. Zentralteils ist es zum Zwecke der verliersicheren und/oder gegen Herabfallen sicheren Gestaltung vorteilhaft, wenn an mindestens einem Bauteil, insbesondere einer der Klemmschalen, mindestens zwei radiale Stege angebracht sind, insbesondere einteilig damit hergestellt bzw. gebildet sind.

Dabei können vorzugweise genau zwei Klemmschalen jeweils mindestens zwei - je nach Anzahl Stege auch drei oder mehr - einteilig damit hergestellte radiale Stege aufweisen. Die Stege sind damit schneller und leichter zu montieren und zugleich unverlierbar.

Es ist auch denkbar, den Zentralteil so zu gestalten, dass dieser aus mehr als zwei Hauptbestandteilen besteht. Dabei kann insbesondere eine der Anzahl radialer Stege entsprechende Anzahl von Bauteilen, insbesondere Klemmschalen, vorgesehen sein. Bevorzugt wird dann jeder Steg jeweils einem Bauteil zugeordnet und einteilig mit diesem hergestellt bzw. gebildet.

In einer bevorzugten Ausführungsform ist der flexible Tragstrang als Seil ausgeführt (d.h. nicht als Gliederkette). Insbesondere in Kombination mit einem Seil als Tragstrang ist es vorteilhaft, wenn die Befestigungsvorrichtung des Zentralteils in Art einer Gelenk-Klemmschelle bzw. als Schraub-Klemmvorrichtung ausgeführt ist. Dazu kann diese ein Gelenk sowie eine Spannschraube umfassen, um die mindestens zwei oder genau zwei Bauteile, insbesondere Klemmschalen, unter Erzeugung einer Klemmkraft am Tragstrang bzw. Seil zu befestigen bzw. axial festzulegen und damit den betrachteten Führungskörper in Längsrichtung am Seil zu sichern.

In einer bevorzugten Ausführungsform sind eine der Anzahl radialer Stege entsprechende Anzahl Umfangselemente vorgesehen, wobei die Umfangselemente als bogenförmige Segmente ausgeführt sind und/oder lösbar an jeweils zwei radialen Stegen befestigt sind. Es werden somit bevorzugt mindestens drei Umfangselemente, besonders bevorzugt mindestens vier separate Umfangselemente vorgesehen. Alle Umfangselemente können insbesondere als Gleichteile ausgeführt sein, z.B. als Bogensegmente mit näherungsweise Viertelkreisform oder ähnlich Viertelschalen oder dgl.

Es kann vorgesehen sein, dass jeder radialer Steg einen radial erstreckenden Abschnitt sowie zumindest einen in Umfangsrichtung erstreckenden, insbesondere einstückig mit dem radial erstreckenden Abschnitt ausgeführten, Vorsprung zum lösbaren Verbinden mit jeweils einem Umfangselement umfasst. Hierbei kann der Vorsprung ein Rastelement zum Verrasten mit dem Umfangselement aufweisen.

Der Außenteil mit dem einen oder mehreren Umfangselement bildet vorzugsweise im geschlossenen, betriebsbereit montierten Zustand des Führungskörpers einen umfänglich geschlossenen, durchgehenden Ring. Der Ring kann optional ggf. durch radiale Endbereiche der Stege ergänzt bzw. durchquert sein, aber das Außenteil bzw. die Umfangselemente umgeben ansonsten vollumfänglich den Zentralteil. Dies ermöglicht eine günstigere Krafteinleitung von radialen Kräften über mehrere Stege und vermindert unerwünschte Verformung des Außenteils.

Zum Öffnen des Führungskörpers für ein Einfügen und Entfernen von Leitungen, bspw. in der Herstellung oder bei einer Wartung, ist vorzugsweise vorgesehen, dass jedes Umfangselement ein erstes Ende aufweist, welches durch eine Gelenkverbindung aufschwenkbar mit einem radialen Steg verbunden ist.

Weiterhin kann jedes Umfangselement ein zweites Ende aufweisen, welches durch eine Schnappverbindung mit einem weiteren, benachbarten radialen Steg verrastbar ist, und so zwecks Aufschwenken bedarfsweise von diesem Steg gelöst werden kann.

Eine beidseitige Befestigung der Enden jedes Umfangselements, welche vorzugsweise einseitig leichter lösbar ist, vereinfacht die Montage und Handhabung erheblich. Die Umfangselemente können damit bedarfsweise geöffnet werden, was insbesondere bei einer höheren Anzahl an Umfangselementen bzw. radialen Stegen besonders vorteilhaft in der Handhabung ist, bspw. wenn nur eine Leitung erneuert werden muss.

Zur verbesserten Krafteinleitung haben die Umfangselemente jeweils in Umfangrichtung wirkende, im Wesentlichen radial liegende Stützflächen, welche auf den radialen Stegen abgestützt sind. Bei einem segmentartigen Aufbau mit einer Anzahl Umfangselemente identisch zur Anzahl Stege kann eine radiale Querkraft somit ringsum auf mehrere oder alle radialen Stege verteilt werden.

In einer Ausführungsform ist vorgesehen, dass das erste Ende des Umfangselements einen Gelenkbereich aufweist und in Axialrichtung beidseitig neben dem Gelenkbereich zwei Stützflächen bildet, mittels welchen das erste Ende am radialen Steg in Umfangsrichtung abstützbar ist. Durch den axialen Abstand zwischen beiden Stützflächen wird zudem besser gegen ungewollte Bewegung bzw. Kippen in Axialrichtung gesichert.

Weiterhin kann auch das zweite Ende des Umfangselements eine oder ggf. mehrere Stützflächen aufweisen, mittels welcher das zweite Ende am radialen Steg in Umfangsrichtung abstützbar ist, ggf. auch durch zwei axial beabstandete Flächen.

Ergänzend oder alternativ ist vorgesehen, dass das zweite Ende des Umfangselements eine Rastaufnahme bildet, welche mit einem Rastvorsprung am weiteren radialen Steg verrastbar ist, wobei Rastaufnahme und Rastvorsprung insbesondere im Wesentlichen in Tangentialrichtung verlaufen und/oder durch Hebeln bzw. Torsion um eine Tangentialrichtung lösbar sind. Hierdurch kann ein unerwünschtes Lösen der Rastverbindung durch radiale Störkräfte vermieden werden, da die Rastverbindung bestimmungsgemäß nicht durch Kraft in Radialrichtung gelöst werden soll.

Der radiale Steg kann weiterhin vorzugsweise eine mit der Rastaufnahme des Umfangselements zusammenwirkende Sicherung in Tangentialrichtung aufweisen.

Um den Zugang zum Aufnahmeraum für Leitungen zu öffnen wird vorzugweise jeweils ein Ende des Umfangselements schwenkbar an einem radialen Steg gelagert. Dies kann z.B. durch ein Gelenk in Art eines Scharniers oder dergleichen erfolgen. Alternativ können aber auch beide Enden des Umfangselements andersartig, z.B. durch Schnappverbindung an Stegen befestigt sein, was ggf. die Krafteinleitung weiter vereinfacht.

In einer bevorzugten Ausführungsform hat das erste Ende des Umfangselements einen Gelenkbereich mit einem Schwenkzapfen, welcher mit einem Schwenkhaken am radialen Steg schwenkbar verbunden ist. Hierbei ist zur Verliersicherung bzw. gegen ungewolltes Abtrennen des Umfangselements besonders bevorzugt, wenn das erste Ende des Umfangselements eine Entriegelungsfläche bildet, die in Zusammenwirkung mit dem Steg ein Lösen des Schwenkzapfens aus dem Schwenkhaken nur in einem beschränkten Winkelbereich bei gelöster Schnappverbindung am zweiten Ende erlaubt. Eine solche Entriegelungsfläche kann z.B. durch einen zurückspringenden Bereich zwischen der vorgenannten Stützfläche einerseits und einer weiteren Anschlagfläche als Winkelbegrenzung für die maximal aufgeschwenkte Stellung vorgesehen sein.

Damit die Anzahl umfänglich zugänglicher Bereiche für die Montage oder Wartungszwecke reduziert wird, bzw. nicht für jedes Umfangselement ein eigener Zugang entsteht ist es vorteilhaft, wenn mindestens ein erster radialer Steg jeweils beidseitig mit jeweils einem ersten Ende von zwei Umfangselementen gelenkig verbunden ist, und hierzu vorzugsweise zwei Schwenkaufnahmen für je ein Umfangselement aufweist. So kann bspw. bei Verwendung von vier Stegen an jeweils nur zwei diametral gegenüberliegenden Seiten der Zugang vorgesehen sein, um Leitungen einzulegen bzw. zu entnehmen, d.h. die Umfangselement sind paarweise wie ein zweiflügeliges Fenster in demselben Umfangsbereich bzw. von derselben Seite zu öffnen.

Dementsprechend ist es ebenso vorteilhaft, wenn mindestens ein zweiter radialer Steg jeweils beidseitig durch eine Schnappverbindung mit jeweils einem zweiten Ende von zwei Umfangselementen verrastbar ist, und hierzu vorzugsweise zwei Rastvorsprünge für je ein Umfangselement aufweist.

Somit können zwei Umfangselemente mit beiden ersten Enden an demselben Steg schwenkbar gelagert sein bzw. mit beiden zweiten Enden an einem weiteren Steg geschlossen werden.

Der der Außenteil kann gegebenenfalls auch aus nur einem im Wesentlichen vollständig umlaufenden Umfangselement bestehen.

Bevorzugt werden jedoch mindestens zwei Umfangselemente, insbesondere mindestens drei Umfangselemente umfasst, welche vorzugsweise lösbar, beweglich und/oder aufschwenkbar am Zentralteil gehalten.

In einer bevorzugten Weiterbildung umfasst der Außenteil nebst dem bzw. den Umfangselementen weiterhin einen umfänglichen, ringförmigen elastischen Puffer bzw. Protektor zur Stoßdämpfung. Der Puffer umgibt außenseitig die Umfangselemente und ist an diesen vorzugsweise in Axialrichtung gehalten. Hierzu können Umfangselement(e) außenseitig und Puffer innenseitig eine Formgebung mit ringförmiger Vertiefung und eingreifendem Vorsprung aufweisen, welches ein Halten des Puffers in Axialrichtung bewirkt. Der Puffer kann zugleich eine Verliersicherung für die Umfangselemente bilden.

Vorzugweise hat einer von mindestens drei radialen Stegen, insbesondere einer der vorgenannten zweiten radialen Stege, d.h. ein Steg mit welchem zwei Umfangselemente verrastbar sind, einen radial vorstehenden Sicherungsbereich z.B. mit einer Sicherungsöffnung. Hieran können dann z.B. zwei Enden des ringförmigen elastischen Puffers mittels einer Sicherungsschraube verliersicher befestigt werden.

Vorzugsweise sind die Umfangselemente unabhängig vom Puffer in einer geschlossenen Stellung an einem oder mehreren Stegen befestigbar, insbesondere verrastbar bzw. schwenkbar gehalten. Die Montage und Wartung wird vereinfacht, wenn die Umfangselemente auch nach Abnehmen des Puffers in geschlossener Stellung gehalten bleiben d.h. bedarfsweise geöffnet werden müssen.

In einer bevorzugten Ausführungsform ist jeder der der radialen Stege jeweils einteilig ausgeführt ist.

Jedes Umfangselement ist vorzugsweise zumindest zwischen zwei umfänglich aufeinanderfolgenden Stegen als durchgehendes Bogensegment ausgeführt ist und, je nach Anzahl Umfangselemente, vorzugsweise endseitig an diesen Stegen gehalten.

Mechanisch vorteilhaft bzgl. der Kraftaufnahme ist es, wenn die radialen Stege in Umfangsrichtung gleichverteilt um die Mittelachse angeordnet sind und/oder jedes Umfangselement kreisbogenförmig ausgeführt ist und in Umfangsrichtung ein Bogenmaß von ≤ 120°, insbesondere ≤ 90°, aufweist.

Die vorgeschlagene Bauweise eignet sich insbesondere für Leitungen mit hohem spezifischen Längengewicht und/oder großen Leitungsdurchmesser, d.h. für entsprechend dimensionierte Führungskörper bei denen der Innendurchmesser des Außenteils ≥ 300mm, insbesondere ≥ 350mm beträgt.

Die Erfindung betrifft weiterhin auch einen Führungskörper für sich genommen (per se), der speziell für eine Leitungsführungseinrichtung nach einem der vorstehenden Ausführungsbeispiele gestaltet ist. Der Führungskörper hat erfindungsgemäß am Zentralteil mindestens drei radiale Stege, insbesondere mindestens vier radiale Stege, um den Außenteil zu halten. Der Führungskörper kann weiterhin vorteilhaft die vorgenannten Merkmale aufweisen.

Die vorgeschlagene Leitungsführungseinrichtung eignet sich unter anderem zur Verwendung in einer Anordnung zur Leitungsversorgung, z.B. in einer Bohranlage oder zur Landstromversorgung von Schiffen, bei welcher eine Umlenkrolle und/oder eine Trommel vorgesehen ist, wobei die Leitungsführungseinrichtung über die Umlenkrolle umgelenkt wird bzw. mittels der Trommel auf- und abgetrommelt wird.

Besondere Vorteile bietet die Erfindung dort, wo relativ schwere Leitungsbündel über eine beachtliche Länge im Wesentlichen vertikal hängend angeordnet werden müssen. Die vorliegende Erfindung ist daher besonders geeignet zur Verwendung in einer Land- bzw. Onshore- oder Meeres- bzw. Offshore-Bohranlage, insbesondere als Service-Loop, jedoch nicht auf diese Gebiete beschränkt. Weitere Anwendungen der Meerestechnik sind z.B. Versorgungskabel (Engl. umbilical) zwischen Plattform und Versorgungsschiff, oder die Landstromversorgung von Schiffen. Auch für landgebundene Anwendungen, insbesondere hängende Anwendungen, z.B. in Bohr- oder Tiefbaugeräten oder in der Bergbautechnik, eignet sich die Lösung besonders gut.

Der Tragstrang kann insbesondere ein zugfestes Tragseil, z.B. aus hochfestem Kunststoff sein. Zugfest bedeutet vorliegend, dass der Tragstrang bzw. das Tragseil ausreichend zugfest ist, um das Gesamtgewicht der Leitungsführungseinrichtung inkl. aller Leitungen zu tragen, d.h. ein gedachtes endseitiges Gewicht das dem Gesamtgewicht der Leitungsführungseinrichtung mit allen Leitungen entspricht. Die erforderliche statische Tragfähigkeit des Tragstrangs ist anwendungsabhängig, sollte aber typisch >> 1000kg betragen.

Als Tragstrang kommt auch ein Drahtseil aus einzelnen Seildrähten in Betracht, vorzugsweise mit Nennfestigkeit des Drahtwerkstoffes > 900 N/mm2. Ergänzend oder alternativ zu Seildrähten aus Kunststoff kommen auch Seildrähte aus Stahl in Betracht ggf. mit einer Seele aus Kunststoff. Der Tragstrang bzw. das Tragseil soll möglichst dehnungsarm sein. Alternativ zu einem Tragseil kommt bspw. auch eine Gliederkette, z.B. aus Stahlgliedern, als Tragstrang in Betracht.

Bevorzugt wird jedoch ein Tragseil aus hochfestem Kunststoff in Verbindung mit Führungskörpern die zumindest überwiegend aus Kunststoff hergestellt sind. Hierdurch lässt sich für die Leitungsführungseinrichtung an sich (ohne geführte Leitungen) auch bei vergleichsweise großer Aufnahmekapazität der Führungskörper bzw. großem Innendurchmesser, z.B. >>200mm, und entsprechender Tragkraft, ein vergleichsweise geringes Längengewicht < 40kg/m erzielen. Gegenüber Gliederketten ist zudem die Geräuschemission deutlich geringer.

Für bestimmungsgemäße Anwendungen, insbesondere in Bohranlagen, hat der Tragstrang vorzugsweise eine Länge von mindestens 5m, insbesondere mindestens 10m. Der Tragstrang ist dabei vorzugsweise vollständig durchgehend und weist eine höhere Reiß- und Zugfestigkeit auf als die geführten Leitungen. Der Tragstrang bzw. das Tragseil erstreckt sich vorzugsweise über die gewünschte Gesamtlänge der Leitungsführungseinrichtung und steht endseitig über die Führungskörper bzw. vor um die gewichtstragende Befestigung des Tragstrangs bzw. Tragseil zu erleichtern.

### ZWEITER ASPEKT

Gemäß einem weiteren unabhängigen Aspekt der Erfindung wird zur Lösung der eingangsgenannten zweiten Aufgabe eine Leitungsführungseinrichtung nach dem unabhängigen Anspruch 18 vorgeschlagen. Vorteilhafte Weiterbildungen hierzu sind in den Unteransprüchen 19 bis 26 angegeben. Grundsätzlich kommt es beim zweiten Aspekt nicht auf die Anzahl radialer Stege an, vorteilhafte Merkmale beider Aspekte sind jedoch auch miteinander kombinierbar.

Der zweite Aspekt betrifft eine Leitungsführungseinrichtung zur Führung von mehreren Leitungen, wie Kabel, Schläuche, oder dgl., , welche einen zugfesten, flexiblen Tragstrang aufweist, welcher sich über die Länge der Leitungsführungseinrichtung erstrecken kann und hierzu aus einem durchgehenden oder mehreren verbundenen Abschnitten bestehen kann. Am Tragstrang sind in Längsrichtung eine Anzahl Körper angeordnet, wobei benachbarte Körper zueinander räumlich auslenkbar sind. Zumindest einige dieser Körper sind als Führungskörper für Leitungen ausgeführt und haben hierzu jeweils einen Zentralteil mit Befestigungsvorrichtung zum Befestigen am Tragstrang, sowie einen Außenteil mit mindestens einem Umfangselement, welches einen Aufnahmebereich für Leitungen nach Außen begrenzt.

Gemäß dem unabhängigen zweiten Aspekt der Erfindung wird vorgeschlagen dass, zumindest in einem Längsabschnitt der Leitungsführungseinrichtung oder über deren gesamte Länge, zwischen jeweils zwei Führungskörpern mindestens ein Abstandskörper am Tragstrang vorgesehen ist, wobei der Abstandskörper einen Abstand zwischen den Zentralteilen der jeweils zwei Führungskörper vorgibt. Der Abstandskörper ist von den Führungskörpern verschieden gestaltet, und kann hierzu beispielsweise ohne Außenteil, jedoch mit zu den Führungskörpern funktionell ähnlich gestaltetem Zentralteil ausgeführt sein.

Eine Kernfunktion des Abstandskörpers besteht darin, zwischen zwei Führungskörpern einen Abstand entlang des Tragstrangs vorzugeben, ohne jedoch deren räumliche Auslenkbarkeit maßgeblich zu beeinträchtigen. Der Abstandskörper kann hierzu insbesondere mit gegenüber den Führungskörpern reduziertem Außendurchmesser und/oder derart gestaltet sein, dass die Außenteile der zwei Führungskörper bei vollständig ausgelenkter Relativstellung aneinander anliegen können, insbesondere unmittelbar aneinander anschlagen können.

Durch geeignet gestaltete Abstandskörper, insbesondere mit gegenüber dem Außenteil der Führungskörper deutlich reduziertem Außendurchmesser kann auf einfache Weise ein deutlich größerer relativer Schwenkwinkel von den jeweils zwei beabstandeten Führungskörpern bzw. eine stärkere Auslenkung gegenüber der geraden Strecklage erzielt werden, d.h. ein spürbar reduzierter Krümmungsradius bzw. Biegeradius im Umlenkbereich. Dies ist besonders vorteilhaft bei Leitungsführungseinrichtungen mit großem Durchmesser, d.h. für Anwendungen mit vielen Leitungen und/oder Leitungen großen Durchmessers, z.B. bei einer Tiefbohranlage.

Die Abstandskörper können weiterhin eine Versteifung des Tragstrangs bewirken, sodass im Vergleich zur einfacheren Maßnahme einer Befestigung mit größerem Abstand zwischen Führungskörpern am Tragseil ein unerwünschtes Abknicken zum Schutz der Leitungen verhindert wird. Dies ist insbesondere bei Verwendung eines flexiblen Seils als Tragstrang vorteilhaft.

In einer Ausführungsform ist in dem Längsabschnitt, entlang der Längsrichtung des Tragstrangs betrachtet, jeder n-te Körper, mit n ≥ 2, als Führungskörper ausgeführt. Es kann z.B. nur jeder zweite oder jede dritte Körper als eigentlicher Führungskörper zur Leitungsführung vorgesehen sein. Entsprechend oder alternativ kann zwischen zwei Führungskörpern jeweils genau ein Abstandskörper vorgesehen sein.

In besonders einfachem Aufbau sind, zumindest im Längsabschnitt oder über die gesamte Länge der Leitungsführungseinrichtung, Führungskörper mit Abstandskörpern alternierend vorgesehen.

Ein zusätzlicher Vorteil der Abstandskörper ist die Gewichtseinsparung, sodass das Gesamtgewicht der Leitungsführungseinrichtung durch Vorsehen von Abstandskörpern verringert werden kann.

Das Zentralteil begrenzt den Aufnahmebereich für Leitungen nach radial Innen. Bevorzugt sind die Abstandskörper mit einer kompakten Außenkontur im Querschnitt senkrecht zur Längsrichtung ausgeführt, welche im Wesentlichen innerhalb der durch den Zentralteil der Führungskörper definierten radial inneren Begrenzung eines Aufnahmebereichs für Leitungen liegt. Somit steht die Kontur der Abstandskörper vorzugsweise und im Wesentlichen radial nicht in den Aufnahmebereich vor, sodass der Aufnahmebereich für Leitungen in Axialrichtung durchgehend freibleibt.

In einer bevorzugten Ausführungsform, analog zu einer bevorzugten Gestaltung der Führungskörper nach dem ersten Aspekt, kann vorgesehen sein, dass jeder Abstandskörper zwei angrenzende Körper räumlich auslenkbar, insbesondere gelenkig verbindet. Hierbei kann vorzugsweise jeder Abstandskörper zur gelenkigen Verbindung mit Führungskörpern zwei passende stirnseitig gegenüberliegende Gelenkbereiche aufweisen. Diese können dabei zur Zusammenwirkung mit entsprechenden Gelenkbereichen der Zentralteile der Führungskörper passend bzw. korrespondierend ausgeführt sein. Bevorzugt sind die Gelenkbereiche der Abstandskörper und/oder Führungskörper insbesondere axial lösbar miteinander verbindbar, und vorzugsweise so, dass Zugkräfte nicht über die Abstandskörper und/oder Führungskörper, sondern überwiegend oder ausschließlich vom Tragstrang aufgenommen werden.

Bevorzugt sind die Abstandskörper, insbesondere in Axialrichtung, so dimensioniert, dass eine durchgehend gleichbleibende Kettenteilung in dem Längsabschnitt erzielt wird. Die Kettenteilung bezeichnet dabei z.B. den axialen Abstand zwischen zwei aufeinanderfolgenden Gelenkzentren der gelenkigen Verbindung der Körper, und wird hier analog gemäß der bei Gliederketten bekannten Definition verstanden.

Grundsätzlich vorteilhaft ist, wenn die Abstandskörper in Radialrichtung möglichst kompakt bauen, d.h. vorzugsweise beträgt der maximale Außendurchmesser der Abstandskörper deutlich weniger, insbesondere weniger als 33% des Außendurchmessers der Außenteile der Führungskörper, insbesondere ≤ 30% des Außendurchmessers der Außenteile.

Konstruktiv robust bilden die Außenteile eine kreisringförmige Außenkontur. Die Anwendung des zweiten Aspekts ist insbesondere für die Realisierung großer Durchmesser vorteilhaft. Dementsprechend kann vorgesehen sein, dass der Außendurchmesser der Außenteile der Führungskörper mindestens das 2,5-fache der Kettenteilung, insbesondere ≥ 2,8-fache der Kettenteilung beträgt. Ergänzend oder alternativ kann der Außendurchmesser der Außenteile beispielsweise > 300mm oder größer betragen. Auch bei kleineren Durchmessern kann eine Reduzierung des Biegeradius jedoch Vorteile bieten.

In einer Ausführungsform kann jeder Abstandskörper eine axiale Durchgangsöffnung für den Tragstrang bilden und mehrteilig ausgeführt sein, insbesondere mit mindestens zwei Bauteilen zur form- und/oder kraftschlüssigen Befestigung am Tragstrang. Dies ist insbesondere für die Herstellung und Montage vorteilhaft, jedoch nicht zwingend erforderlich. Besonders einfache Abstandskörper können z.B. als einteilige rohrförmige Abstandshülsen ausgeführt sein, dies erfordert bei Herstellung und Wartung jedoch ggf. ein auffädeln auf den Tragstrang.

In Anlehnung an eine bevorzugte Gestaltung der Führungskörper ist jeder Abstandskörper vorzugsweise in Art einer Gelenk-Klemmschelle ausgeführt. Hierzu kann der Abstandskörper ein Klemmgelenk sowie eine Spannschraube umfassen, z.B. um die zwei schalenartigen Bauteile unter Erzeugung einer Klemmkraft am Tragstrang zu befestigen, insbesondere auch in Axialrichtung verschiebungsfest.

In einfacher Bauweise kann jeder Abstandskörper im Wesentlichen aus zwei länglichen halbschalenartigen Bauteilen bestehen. Hierbei können die Bauteile insbesondere mit störkantenfreier Außenkontur und/oder ohne radial vorstehende Stege ausgeführt sein.

Die Führungskörper an sich können beim zweiten Aspekt einer Bauweise gemäß der Lehre aus WO 2019/243377 A1 entsprechen. Diese können - ausgenommen der Anzahl Stege - auch gemäß einer bevorzugten Gestaltung nach dem ersten Aspekt bzw. dessen nachfolgenden Ausführungsbeispielen gestaltet sein.

Einzelne Merkmale, insbesondere der unabhängigen ersten und zweiten Aspekte, sind im vorliegenden Rahmen jeweils als erfindungserheblich und auch als kombinierbar offenbart zu verstehen.

Weitere Einzelheiten, Merkmale und Vorteile der Erfindung ergeben sich aus der nachfolgenden, ausführlichen Beschreibung von bevorzugten Ausführungsbeispielen anhand der beiliegenden Abbildungen. Hierbei zeigen:
**FIG.1A-1C****:** ein erstes Ausführungsbeispiel einer Leitungsführungseinrichtung in hängender Anordnung zur Versorgung eines vertikal beweglichen Verbrauchers in Seitenansicht (FIG.1A) und in perspektivischer Vergrößerung des unteren Bereichs bzw. der Umlenk-Schleife (FIG.1B); sowie einen Umlenkbereich mit welchem die Leitungsführungseinrichtung um eine nur schematisch angedeutete Umlenkrolle umgelenkt ist (FIG.1C);
**FIG.2A-2B****:** einen axialen Schnitt/Längsschnitt (FIG.2A) durch eine Anzahl Führungskörper entlang der Längsrichtung und einen radialen Schnitt/Querschnitt (FIG.2B) eines Führungskörpers nach einem ersten Ausführungsbeispiel für eine Leitungsführungseinrichtung nach FIG.1A-1B;
**FIG.2C-2D****:** eine Teildarstellung in Frontansicht eines vollständig geöffneten Führungskörpers (FIG.2C) nach FIG.2A-2B und eine Teildarstellung von dessen Zentralteil in Frontansicht (FIG.2D);
**FIG.3A-3C****:** einen Endbereich eines radialen Stegs (FIG.3A) und ein einzelnes Umfangselement (FIG.3B) aus FIG.2A-2D, jeweils in Perspektivansicht, sowie eine Darstellung einer Gelenkverbindung des Umfangselements (FIG.3C) im Querschnitt entsprechend FIG.2B;
**FIG.4A-4B****:** ein alternatives Ausführungsbeispiel eines Führungskörpers für eine Leitungsführungseinrichtung nach FIG.1A-1B, hier mit drei radialen Stegen in perspektivischer (FIG.4A) und frontaler Ansicht (FIG.4B);
**FIG.5A-5B****:** ein weiteres, bevorzugtes Ausführungsbeispiel eines Führungskörpers für eine Leitungsführungseinrichtung nach FIG.1A-1B, hier mit fünf radialen Stegen in perspektivischer (FIG.5A) und frontaler Ansicht (FIG.5B);
**FIG.6A-6B**: ein bevorzugtes Ausführungsbeispiel einer Leitungsführungseinrichtung gemäß einem unabhängigen zweiten Aspekt der Erfindung in Seitenansicht der Strecklage (FIG.6A) und einer abschnittsweisen Seitenansicht des Umlenkbereichs mit reduziertem Biegeradius (FIG.6B); und
**FIG.7A-7D**: ein bevorzugtes Ausführungsbeispiel eines Abstandskörpers für eine Leitungsführungseinrichtung insbesondere gemäß dem zweiten Aspekt der Erfindung, in perspektivischer Ansicht (FIG.7A), in Drauf- und Seitenansicht (FIG.7B-7C) und in Frontansicht (FIG.7D).

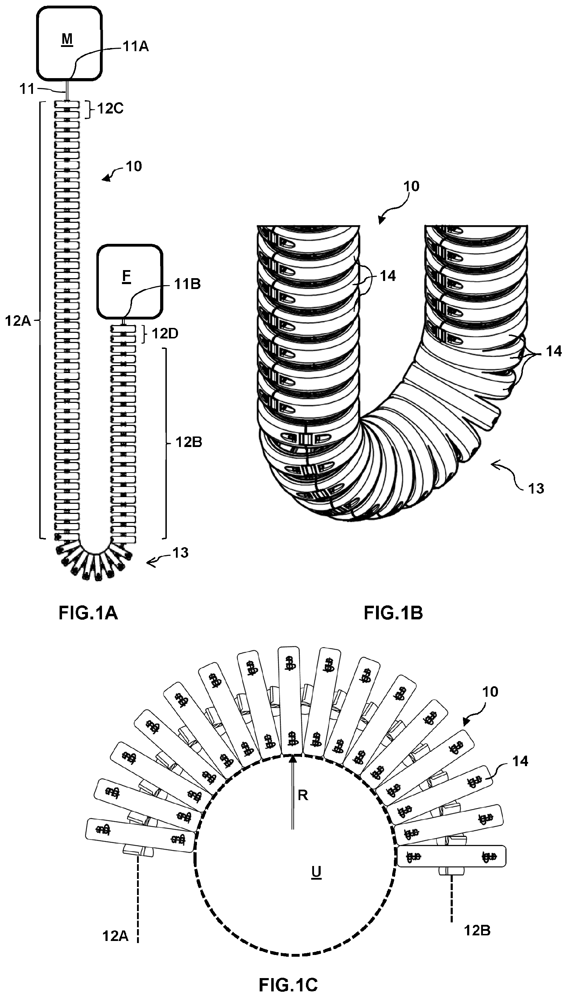

FIG.1A-1B zeigen ein Beispiel einer Leitungsführungseinrichtung 10 in einer hängenden Anordnung mit einem ersten vertikalen Längsabschnitt 12A, der ein erstes Ende 12C hat, und einem zweiten vertikalen Längsabschnitt 12B mit einem zweiten Ende 12D. Das erste Ende 12C ist mit einem in diesem Beispiel vertikal auf- und abfahrenden Maschinenteil M, z.B. einem Bohrkopf oder dgl., verbunden. Der zweite Längsabschnitt 12B wiederum ist mit seinem Ende 12D an einem Gestell bzw. stationärer Maschinenteil F festgelegt. Eine Schleife 13 bildet in FIG.1A einen frei hängenden Umlenkbereich der die beiden im Wesentlichen vertikal herabhängenden Längsabschnitte 12B, 12B verbindet.

Die Leitungsführungseinrichtung 10 hat ein flexibles Tragseil 11 aus hochfesten Kunststoff-Fasern, z.B. aus Hochmodul-Polyäthylen oder Hochmodul-Polyamid oder dgl., das als Tragstrang die Gewichtslast trägt. Dazu sind die freien bzw. beidseitig vorstehenden Endbereiche 11A, 11B des Tragseils 11 in geeigneter Weise am beweglichen Maschinenteil M und am stationären Maschinenteil F befestigt (in FIG.1A schematisch gezeigt). Die Leitungsführungseinrichtung 10 hat als zweiten wesentlichen Bestandteil eine Vielzahl in Längsrichtung des Tragstrangs 11 aufeinanderfolgende, ringförmig geschlossene Führungskörper 14 (FIG.1B). Die Führungskörper 14 sind am Tragseil 11 nacheinander aufgereiht und von diesem gehalten und getragen. Das Tragseil 11 trägt somit zumindest das gesamte Gewicht aller Führungskörper 14.

Wie FIG.1B zeigt, bildet die Schleife 13 zwischen den Längsabschnitten 12A, 12B einen relativ kleinen Radius, d.h. die Längsabschnitte 12A, 12B können auf geringem horizontalem Abstand zueinander verlaufen. Der kleine Radius ist u.a. dadurch möglich, dass benachbarte Führungskörper 14 zueinander stark abgewinkelt werden können. Die Führungskörper 14 sind jeweils zueinander räumlich beweglich, wie FIG.1B veranschaulicht. Der Abstand zwischen den Längsabschnitten 12A, 12B kann jedoch je nach Anwendung auch grösser sein und die Längsabschnitte 12A, 12B müssen nicht vertikal herabhängen. Je nach Anwendung kann die Leitungsführungseinrichtung 10 anders verlaufen.

FIG.1C zeigt schematisch eine Umlenkrolle U, um welche die Leitungsführungseinrichtung 10 umgelenkt wird. Je nach Gewichtslast, z.B. der Länge eines frei hängenden Abschnitts 12A, können hierbei erhebliche Radialkräfte in Richtung des Radius R der Führungskörper 14 auf diese einwirken.

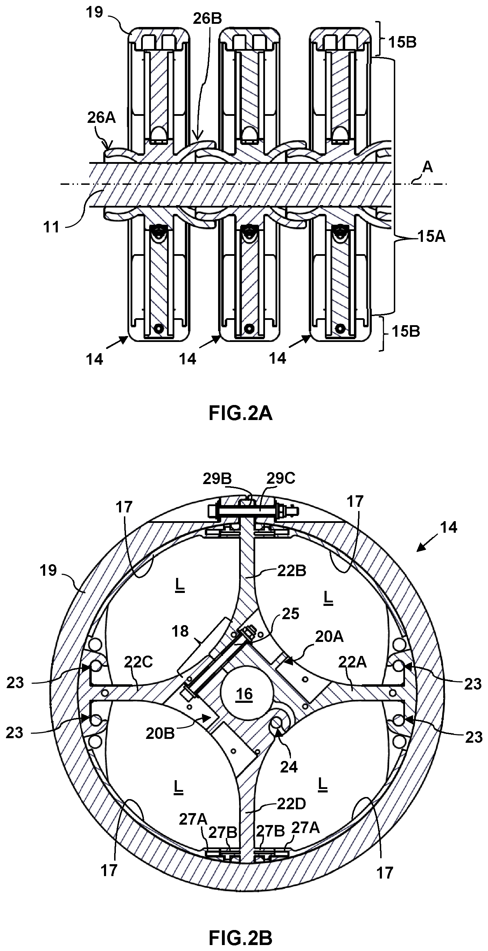

FIG.2A-2B zeigen ein erstes Ausführungsbeispiel eines Führungskörpers 14 für die Leitungsführungseinrichtung 10, welcher zum Auffangen hoher Radialkräfte weiterentwickelt ist. Jeder Führungskörper 14 hat innen einen Zentralkörper bzw. Zentralteil 15A mit einer Mittelachse A und einer zu dieser koaxialen Durchgangsöffnung 16, um den Tragstrang 11 (FIG.1A) durchzuführen und außen einen Außenteil 15B mit hier insgesamt vier kreisbogenförmigen Umfangselementen 17, hier mit je ca. 90° Bogenlänge, um die Leitungen (nicht gezeigt) zu halten. Jedes Umfangselement 17 begrenzt dazu radial nach Außen einen in Axialrichtung offenen Aufnahmebereich L für ein oder mehrere Leitungen.

Der Zentralteil 15A umfasst eine Befestigungsvorrichtung 18 zum axial ortsfesten Befestigen des Führungskörpers 14 am Tragseil 11 (vgl. FIG.2A). Diese ist in FIG.2A-2D als Schraub-Klemmvorrichtung 18 in Art einer Gelenk-Klemmschelle ausgeführt.

Dazu hat der Zentralteil 15A zwei einteilige, einstückig aus Kunststoff hergestellte Bauteile 20A, 20B, die jeweils eine innere Klemmschale 21A, 21B aufweisen. Die Klemmschalen 21A, 21B bilden durch konjugierte Gestaltung an einer Seite ein scharnierartiges Gelenk 24 (vgl. FIG.2B), welches die Klemmschalen 21A, 21B schwenkbar verbindet. An der gegenüberliegenden Seite haben die Klemmschalen 21A, 21B durchgehende Schrauböffnungen für eine Klemmschraube 25, um die innenseitig quasi U-förmigen Klemmschalen 21A, 21B gegeneinander zu spannen. Alternativ kommen auch andere Befestigungen 18, z.B. Schnellspanner oder dgl. in Betracht. Die Klemmschalen 21A, 21B bilden weiterhin mittig zwei etwa halbzylindrische Innenflächen der Durchgangsöffnung 16. Durch Spannen der Klemmschalen 21A, 21B wird der Zentralteil 15A d.h. der Führungskörper 14 am Tragseil 11 axial ortsfest befestigt, denn die Innenfläche der Durchgangsöffnung 16 wird kraftschlüssig am Tragstrang 11 festgelegt. Zur besseren Axialsicherung ist an den Innenflächen beider Klemmschalen 21A, 21B eine quer zur Mittelachse A verlaufende Profilierung, z.B. Klemmverzahnung oder dgl., vorgesehen.

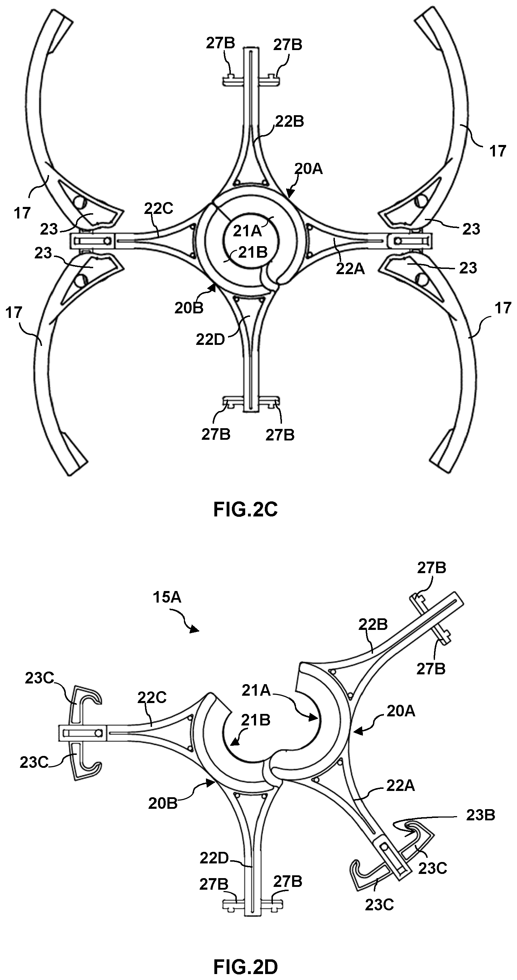

Wie FIG.2B-2D zeigen umfasst jedes der beiden Bauteile 20A, 20B weiterhin einteilig mit der jeweiligen Klemmschale 21A, 21B auch jeweils zwei radiale Stege 22A, 22B bzw. 22C, 22D. Der Zentralbereich bzw. Zentralteil 15A umfasst nach FIG.2A-2D somit insgesamt vier radiale Stege 22A, 22B, 22C, 22D, welche in Umfangsrichtung gleichverteilt mit einem Winkelabstand von ca. 90° angeordnet sind. FIG.2D zeigt lediglich den anhand des Gelenks 24 aufgeklappten Innenteil 15A, ohne Außenteil 15B bzw. Umfangselemente 17, mit einer ausreichenden Öffnung zum seitlichen Anbringen am Tragstrang 11.

An jeweils einem ersten Typ von Stegen 22A bzw. 22C, die jeweils baugleich gestaltet sind, ist am radial äußeren Endbereich der Außenteil 15B angebracht. Diese ersten Stege 22A bzw. 22C lagern hierbei jeweils paarweise zwei Umfangselemente 17 gelenkig, anhand einer Gelenkverbindung 23, in Art eines scharnierartigen Schwenkgelenks bzw. drehgelenkig. Dadurch sind die beiden Umfangselemente 17 jeweils über eine zugeordnete Gelenkverbindung 23, z.B. ein Scharnier, zwischen der geschlossenen Stellung in FIG.2B und einer offenen Stellung in FIG.2C schwenkbar mit dem entsprechenden Steg 22A bzw. 22C des Zentralteils 15A verbunden. So wird das Einlegen bzw. entnehmen von Leitungen in einen der Aufnahmebereiche L erleichtert. Die vier Umfangselemente 17 sind hier vorzugsweise Gleichteile und in Form eines Viertelkreisbogens ausgeführt, z.B. als Kunststoffteile, insbesondere Formteile aus Spritzguss hergestellt.

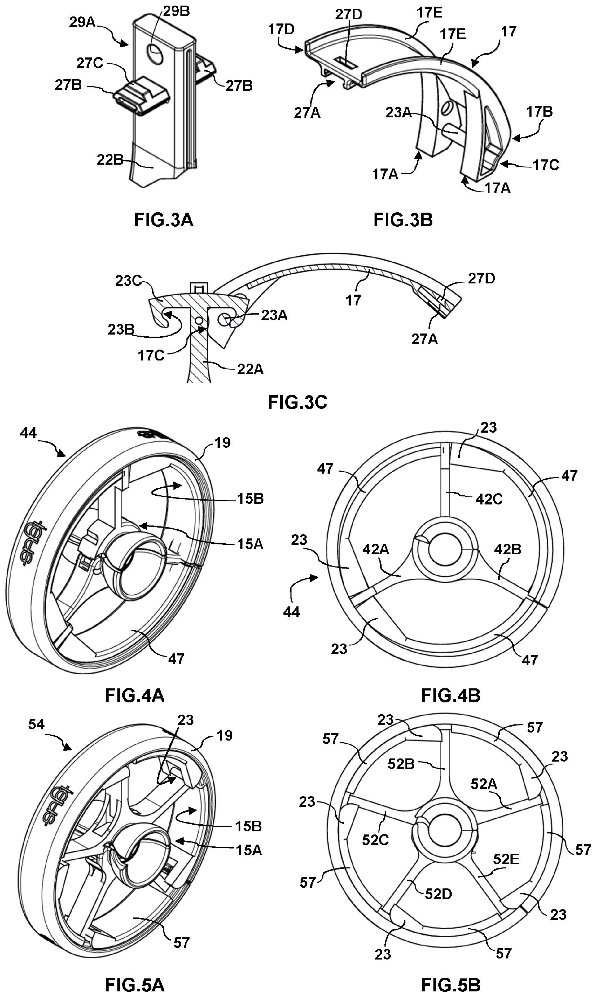

Die Umfangselemente 17 bilden an einem ersten Ende für die Gelenkverbindung 23 axial verlaufende Schwenkzapfen 23A bzw. Lagerbolzen (FIG.3B), die in einer Drehaufnahme 23B drehbar gelagert sind. Die Drehaufnahme 23B ist an einem hakenförmigen etwa tangential angeordneten Vorsprung 23C vorgesehen, von denen jeweils zwei beidseitig an dem ersten Typ Steg 22A bzw. 22C angeordnet sind, wie am besten aus FIG.3C ersichtlich.

FIG.3B zeigt weiterhin am ersten Ende des Umfangselements 17 zwei in Axialrichtung beidseitig neben dem Gelenkbereich mit dem Schwenkzapfen 23A angeordnete Stützflächen 17A, mittels welchen das erste Ende des Umfangselements 17 am jeweiligen radialen Steg 22A bzw. 22C mit der Gelenkverbindung 23 in Umfangsrichtung und gegen Verkippen in Axialrichtung abgestützt wird, wenn das Umfangselement 17 geschlossen ist. Die Stützflächen 17A bilden dabei zugleich den Winkelanschlag der geschlossenen Stellung (FIG.2B). Weiter radial außen liegen zwei Anschlagflächen 17B zur Begrenzung des Aufschwenkwinkels in der voll geöffneten Stellung (in FIG.2C nicht im Anschlag). Zwischen den Flächen 17A, 17B bildet das erste Ende des Umfangselements 17 eine zurückspringende Entriegelungsfläche 17C, die in Zusammenwirkung mit dem hakenförmigen Vorsprung 23C am Steg 22A, 22C ein Lösen des Schwenkzapfens aus dem Haken bzw. der Drehaufnahme 23B nur in einem beschränkten Winkelbereich bei gelöster Schnappverbindung am zweiten Ende erlaubt, wie in FIG.3C veranschaulicht.

Auch das zweite Ende des Umfangselements 17 bildet mit seiner Stirnseite eine Stützfläche 17D aufweist, mittels welcher das zweite Ende am entsprechenden radialen Steg 22B; 22D in Umfangsrichtung abstützbar ist.

An ihrem zweiten Ende können die Umfangselemente 17 mit den radialen Endbereichen der beiden weiteren Stege 22B, 22D, die gemäß einem zweiten Typ gestaltet sind, durch Schnappverbindung zum Schließen der Umfangselemente 17 in der geschlossenen Schwenkstellung (FIG.2B) an diesen zweiten Stegen 22B, 22D befestigt werden. Hierzu bildet das zweite Ende des Umfangselements 17 eine Rastaufnahme 27A, welche mit einem komplementären bzw. konjugiert gestalteten Rastvorsprung 27B am zweiten Typ Steg 22C bzw. 22D verrastbar ist, um das Umfangselement 17 in geschlossener Stellung festzulegen. Hierbei sind die Rastaufnahme 27A und der Rastvorsprung 27B im Wesentlichen in Tangentialrichtung erstreckt und so gestaltet, dass dies durch Aushebeln bzw. Torsion um eine Tangentialrichtung lösbar sind, jedoch durch reine Radialkräfte nicht leicht lösbar sind. Weiterhin ist ein Sicherungsvorsprung 27C am Rastvorsprung 27B vorgesehen, welcher in eine Aussparung 27D am zweiten Ende des Umfangselements 17 eingreift um eine Sicherung in Umfangsrichtung zu bewirken.

FIG.2A-2C zeigen ferner einen ringförmigen elastischen Puffer 19 aus einem Elastomer, der die Umfangselemente 17 im Wesentlichen vollumfänglich umgibt. Der Puffer 19 kann im Querschnitt bzw. an den axialen Stirnseiten und zur Umfangsfläche gerundet sein und dient einerseits als Winkelanschlag zur Begrenzung des minimalen Umlenkradius der Schleife 13 (FIG.1B) und andererseits zur Dämpfung radialer Stöße, z.B. beim Anschlagen an der Anlage/Maschine oder beim Transport. Der Puffer 19 ist in Axialrichtung sicher an den Umfangselementen gehalten, indem er innenseitig einen oder mehrere Vorsprünge aufweist (FIG.2A) die in einer ringförmigen Vertiefung an der Außenseite der Umfangselemente 17 eingreifen. Hierzu haben die Umfangselemente 17 an beiden axialen Stirnseiten einen radial vorstehenden Rand 17E zum Halten des Puffers 19, wie in FIG.3C gezeigt.

FIG.3C zeigt ferner einen radial vorstehenden Sicherungsbereich 29A am Steg 22B, mit einer durchgehende Schrauböffnung 29B für eine für eine Sicherungsschraube 29C mit Sicherheitsmutter oder dgl. um den Puffer 19 verliersicher zu schließen und am Zentralteil 15A zu befestigen. Damit sind zugleich die Umfangselemente 17 durch den Puffer verliersicher am Zentralteil 15A gesichert, vgl. FIG.2B, unabhängig von den Gelenkverbindungen 23 und der Schnappverbindung 27A, 27B. Die radiale Abmessung des Stegs 22B ist entsprechend um die Abmessung des vorstehenden Sicherungsbereichs 29A grösser als beim Steg 22D, der ansonsten identisch ausgeführt ist und insbesondere beidseitig Rastvorsprünge 27B wie in FIG.3A aufweist, vgl. FIG.2B.

Der Innendurchmesser gemessen radial zwischen den Umfangselementen 17, ist hier größer als 350mm, z.B. im Bereich von 400mm.

Jeder Puffer 19 ist als offener Ring mit einem Spalt zum Anbringen auf dem Steg 22B ausgeführt und wird mit der Sicherungsschraube 29B geschlossen. Im hier gezeigten Beispiel steht der Puffer 19 gegenüber den Umfangselementen 17 nicht axial vor, sondern liegt axial bündig zur axialen Stirnseite der Umfangselemente 17, ein Überstand ist jedoch möglich. Die elastisch stoßdämpfenden Puffer 19 können Vollkörper oder bevorzugt zur Gewichtseinsparung auch als Profilkörper, wie in FIGH.2A gezeigt, oder als Hohlkörper ausgeführt sein.

FIG.2A zeigt ferner zwei mittige, axial vorstehende Gelenkbereiche 26A, 26B des Zentralteils 15A. Diese dienen einer definierten, verschleißarmen Relativbewegung benachbarter Führungskörper 14 ohne Querverschiebungen zueinander, aus der gestreckten Lage in den Längsabschnitten 12A, 12B in die vollständige abgewinkelte Lage im Scheitel der Schleife 13 (FIG.1B unten) und zurück. Hierzu hat jeder Zentralteil 15A zwei stirnseitig gegenüberliegende Gelenkbereiche 26A, 26B, koaxial zur Mittelachse A. Die gegenüberliegenden Gelenkbereiche 26A, 26B sind so konjugiert bzw. gepaart ausgeführt, sodass der eine Gelenkbereich 26A lösbar koaxial in den jeweils konjugierten anderen Gelenkbereich 26B eines benachbarten Führungskörpers mit geringem oder keinem Kraftaufwand, insbesondere werkzeugfrei, axial einsteckbar ist und keine Zugkräfte in Axialrichtung A überträgt. Die Bauweise der Gelenkbereiche 26A, 26B an sich entspricht der Lehre aus WO 2019/243377 A1.

FIG.4A-4B zeigen ein alternatives Ausführungsbeispiel eines Führungskörpers 44 für eine Leitungsführungseinrichtung nach FIG.1A-1B. Der Führungskörper 44 hat genau drei radiale Stege 42A, 42B, 42C. Der radiale Steg 42A bildet zwei Gelenkverbindungen mit den daran angebrachten Umfangselementen 47, analog zum Steg 22A aus FIG.2A bis FIG.3C. Der radiale Steg 42A bildet beiderseits zwei Schnappverbindungen mit den daran angebrachten Umfangselementen 47. Der radiale Steg 42C hingegen hat einerseits eine Gelenkverbindung und andererseits eine Schnappverbindung mit den angrenzenden Umfangselementen 47. Die Umfangselemente 47 haben hierbei ein Bogenmaß von ca. 120° und können ansonsten, insbesondere hinsichtlich der Gelenk- und Schnappverbindung der Bauweise aus FIG.2A bis FIG.3C entsprechen. Auch die weiteren Merkmale des Führungskörpers 44 entsprechen dem ersten Ausführungsbeispiel, wobei hier an einem der Bauteile des Zentralteils 15A zwei radiale Stege 42A, 42B und an dem anderen Bauteil nur ein radialer Stege 42C einteilig vorgesehen ist.

FIG.5A-5B zeigen ein alternatives Ausführungsbeispiel eines Führungskörpers 54 für eine Leitungsführungseinrichtung nach FIG.1A-1B. Der Führungskörper 54 hat genau fünf radiale Stege 52A, 52B, 52C, 52D, 52E. Jeder radiale Steg 52A... 52E hat dabei an seinem radialen Endbereich einerseits einen Vorsprung zur Gelenkverbindung 23 entsprechend FIG.3C und andererseits einen Rastvorsprung zur Schnappverbindung mit einer korrespondierenden Rastaufnahme entsprechend FIG.3A-3B. Die Umfangselemente 57 haben in FIG.5A-5B ein Bogenmaß von ca. 70° und sind ansonsten, insbesondere hinsichtlich der Gelenk- und Schnappverbindung entsprechend der Bauweise aus FIG.2A bis FIG.3C ausgeführt. Auch die weiteren Merkmale des Führungskörpers 54 entsprechen dem ersten Ausführungsbeispiel aus FIG.2A-2D, wobei hier an einem der Bauteile des Zentralteils 15A drei radiale Stege 52A, 52B, 52C und an dem anderen zwei radiale Stege 52D, 52E einteilig vorgesehen sind.

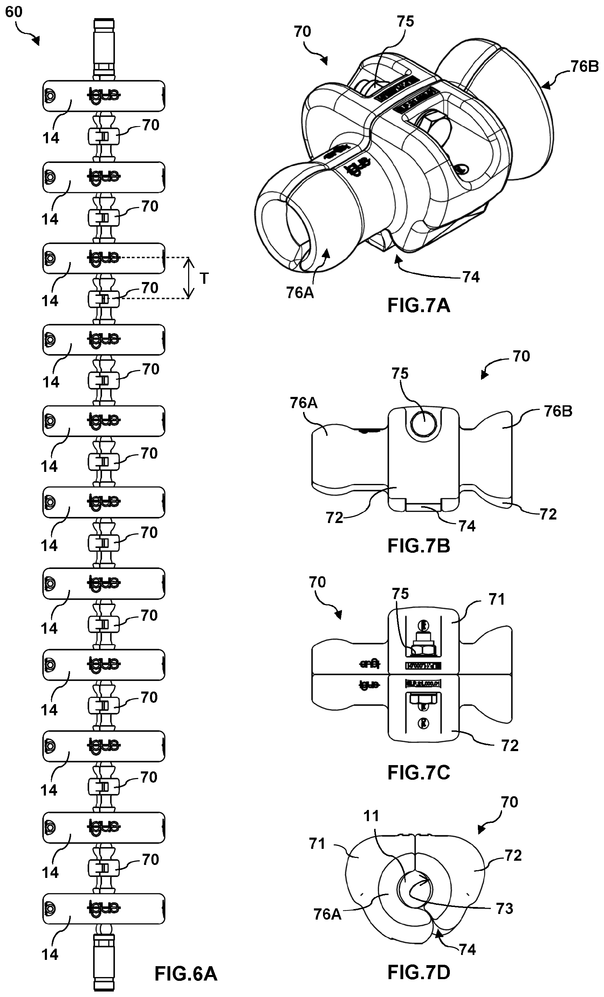

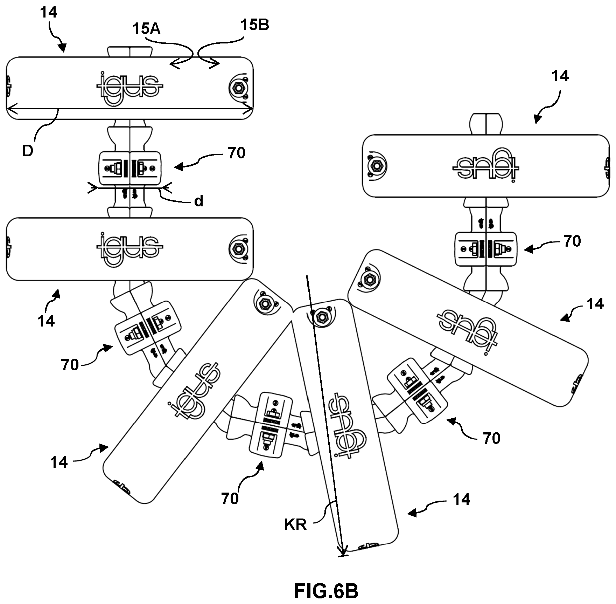

Anhand der FIG.6-7 wird nun ein unabhängiger zweiter Aspekt der Erfindung erläutert. FIG.6A-6B zeigen ein Ausführungsbeispiel einer Leitungsführungseinrichtung 60. Die Leitungsführungseinrichtung 60 ist in FIG.6A nur zur beispielhaften Veranschaulichung in Strecklage und gegenüber praktischen Anwendungen verkürzt dargestellt.

Die Leitungsführungseinrichtung 60 ermöglicht, z.B. gegenüber FIG.1C, einen deutlich reduzierten Krümmungs- bzw. Biegeradius KR, vgl. FIG.6B im Vergleich zur bekannten Bauweise z.B. aus WO 2019/243377 A1.

Hierzu sind zumindest in dem umzulenkenden Längsabschnitt (FIG.6B) oder über die Gesamtlänge der Leitungsführungseinrichtung 60 zwischen jeweils zwei Führungskörpern 14 jeweils mindestens ein Abstandskörper 70 am Tragstrang, hier nicht gezeigt, vgl. FIG.1A, vorgesehen. Der Abstandskörper 70 gewährleistet einen axialen Abstand zwischen den Zentralteilen 15A (vgl. FIG.2A-2D oder FIG.4-5) zweier Führungskörper 14. Die Führungskörper 14 können dabei eine an sich bekannte Bauweise haben mit Zentralteil 15A und Außenteil 15B, z.B. eine Bauweise aus WO 2019/243377 A1 oder auch gemäß den beigefügten FIG.2A-2D oder FIG.4-5 und werden daher nicht näher beschrieben.

Im Gegensatz zu FIG.1-5 besteht die Leitungsführungseinrichtung 60 somit nicht aus gleichartigen Körpern bzw. Gliedern, sondern hat neben dem Tragstrang 11 (FIG.1A) zwei unterschiedliche Körper bzw. Glieder als Hauptbestandteile.

Wie FIG.7A-7D veranschaulichen, sind die Abstandskörper 70 jedoch von den Führungskörpern 14 verschieden gestaltet und haben gegenüber den Führungskörpern 14 einen erheblich reduzierten Außendurchmesser. Die Abstandskörper 70 weisen insbesondere keinen mit Führungskörpern 14 vergleichbaren Außenteil 15B auf und dienen nicht zum Führen bzw. radialen Halten von Leitungen. Im vorliegenden Beispiel haben die Abstandskörper 70 keine radial durch den Aufnahmeraum L vorstehenden Teile, sodass die Außenteile 15B von zwei durch den Abstandskörper 70 auf Abstand gehaltenen Führungskörpern 14 bei vollständig ausgelenkter Relativstellung, wie in FIG.6B gezeigt, unmittelbar aneinander anliegen können. Hierdurch wird ein deutlich kleinerer Biegeradius ermöglicht, auch bei Führungskörpern 14 mit großen Abmessungen im Außendurchmesser und/oder in Axialrichtung des Außenteils 15B.

Im Beispiel aus FIG.6A-6B ist, entlang des Tragseils betrachtet, jeder zweite gliederartige Körper der Leitungsführungseinrichtung 60 ein Führungskörper 14 und alternierend dazu jeder zweite Körper ein Abstandskörper 70, andere Anordnungen liegen jedoch auch im Rahmen der Erfindung, z.B. mit je zwei Abstandskörpern 70 zwischen zwei Führungskörpern 14.

Wie ein Vergleich der Querschnitte bzw. Frontansichten von FIG.7D mit z.B. FIG.2B zeigt, haben die Abstandskörper 70 eine kompakt gestaltete Außenkontur im Querschnitt senkrecht zur Längsrichtung. Diese soll im Wesentlichen innerhalb der durch den Zentralteil 15A der Führungskörper 14 definierten radial inneren Begrenzung des Aufnahmebereichs L (vgl. z.B. FIG.2B) für die Leitungen liegen.

Die Abstandskörper 70 verbinden zwei angrenzende Körper, d.h. Führungskörper 14 oder Abstandskörper 70 räumlich auslenkbar und gelenkig. Hierzu hat der Abstandskörper zwei stirnseitig gegenüberliegende Gelenkbereiche 76A, 76B, welche zu entsprechenden Gelenkbereichen 26A, 26B (vgl. FIG.2A) der Zentralteile 15A der Führungskörper (14) korrespondierend ausgeführt sind. Die Bauweise der Gelenkbereiche 26A, 26B bzw. 76A, 76B an sich entspricht z.B. der Lehre aus WO 2019/243377 A1 und kann u.a. eine axial lösbare, kugelgelenkartige Verbindung ermöglichen, hier mit Gelenkkopf 26A, 76A u. Gelenkaufnahme 26B, 76B. Die Abstandskörper 70 sind in Axialrichtung so dimensioniert, dass eine durchgehend gleichbleibende Kettenteilung T über die Länge erzielt wird.

Der maximale Außendurchmesser d der Abstandskörper 70 ist bevorzugt kleiner als 30% des Außendurchmessers D der Außenteile 15B der Führungskörper 14 und bevorzugt nicht grösser als der begrenzte Innendurchmesser des Aufnahmebereichs L. Der Außendurchmesser der Außenteile 15B kann insbesondere größer sein als das ≥ 2,8-fache der Kettenteilung T, wobei die Abstandskörper 70 dennoch einen sehr kleinen Biegeradius KR ermöglichen, z.B. kleiner als 150% des Außendurchmessers der Außenteile 15B, wie in FIG.6B veranschaulicht.

Die Abstandskörper 70 bestehen aus zwei länglichen halbschalenartigen Bauteilen 71, 72, die im montierten Zustand eine axiale Durchgangsöffnung 73 für den Tragstrang bilden. Zur form- und/oder kraftschlüssigen Befestigung am Tragstrang 11 ist der Abstandskörper 70 in Art einer Gelenk-Klemmschelle ausgeführt. Die Bauteile 71, 72 bilden ein Klemmgelenk 74, in Form eines Scharniers mit Achse parallel zur Längsrichtung, das mittels einer diametral gegenüberliegenden Spannschraube 75 die zwei schalenartigen Bauteile 71, 72 unter Erzeugung einer Klemmkraft radial gegen den Tragstrang 11 spannt (vgl. FIG.7B-7D). Die Bauteile 71, 72 haben eine störkantenfreie Außenkontur und sind ohne radial vorstehende Stege ausgeführt.

Im Allgemeinen umfasst die vorliegende Anmeldung auch die folgenden Aspekte (ursprünglicher Anspruchsgegenstand der Stammanmeldung EP-Anmeldung Nr. 21754979.9) als enthaltenen Inhalt. Die folgenden Aspekte werden ebenfalls in Kombination mit dem Gegenstand der beigefügten Ansprüche offenbart. Darüber hinaus werden die folgenden Aspekte auch in Kombination mit den Merkmalen mindestens einer der oben beschriebenen Ausführungsformen offenbart, und zwar unabhängig voneinander oder in Kombination miteinander:
1. Leitungsführungseinrichtung (10) zur Führung von mehreren Leitungen, wie Kabel, Schläuche, oder dgl., insbesondere für hängende Anwendungen, wie z.B. in einer Bohranlage (1) oder dgl., umfassend
   - einen zugfesten, flexiblen Tragstrang (11), wobei der Tragstrang (11) sich vorzugsweise über die Länge der Leitungsführungseinrichtung erstreckt; und
   - eine Anzahl in Längsrichtung des Tragstrangs (11) an diesem angeordnete Führungskörper (14), wobei benachbarte Führungskörper (14) zueinander räumlich auslenkbar sind; wobei zumindest einige Führungskörper jeweils
      - einen Zentralteil (15A) mit Befestigungsvorrichtung (18) zum Befestigen am Tragstrang (11), sowie
      - einen Außenteil (15B) mit mindestens einem Umfangselement (17), welches einen Aufnahmebereich (L) für Leitungen nach Außen begrenzt, aufweisen; wobei
      mindestens drei radiale Stege (22A... 22D; 42A... 42C; 52A... 52D) am Zentralteil (15A) vorgesehen sind und den Außenteil (15B) halten.
2. Leitungsführungseinrichtung nach Aspekt 1, wobei das mindestens eine Umfangselement (17) lösbar mit mindestens einem der radialen Stege verbunden ist und zur lösbaren Verbindung vorzugweise einen Endbereich, insbesondere einen Endbereich mit einem Rastelement (27A), aufweist; vorzugsweise wobei zumindest ein radialer Steg einen radialen Abschnitt sowie zumindest einen im Wesentlichen in Umfangsrichtung vorstehenden Vorsprung (27B) zum Verbinden mit dem mindestens einem Umfangselement (17) umfasst, wobei der zumindest eine Vorsprung vorzugsweise ein Rastelement (27C) zum Verrasten mit dem Umfangselement aufweist und/oder einstückig mit dem radialen Abschnitt ausgeführt ist.
3. Leitungsführungseinrichtung nach Aspekt 1 oder 2, wobei
   - mindestens vier radiale Stege (22A, 22B, 22C, 22D) am Zentralteil (15A) vorgesehen sind und den Außenteil (15B) tragen bzw. stützen; oder
   - mindestens fünf radiale Stege (52A, 52B, 52C, 52D, 52E) am Zentralteil (15A) vorgesehen sind und den Außenteil (15B) tragen bzw. stützen.
4. Leitungsführungseinrichtung nach einem der Aspekte 1 bis 3, wobei
   - der Zentralteil (15A) eine axiale Durchgangsöffnung (16) für den Tragstrang (11) bildet und vorzugsweise mehrteilig ausgeführt ist, wobei der Zentralteil (15A) zum Befestigen am Tragstrang (11) besonders bevorzugt mindestens zwei oder genau zwei Bauteile (20A, 20B), insbesondere Klemmschalen, aufweist, welche zur formschlüssigen und/oder kraftschlüssigen Befestigung am Tragstrang (11) ausgeführt sind und die Durchgangsöffnung (16) begrenzen;
   - wobei vorzugsweise an mindestens einem Bauteil (20A, 20B), insbesondere einer der Klemmschalen, mindestens zwei radiale Stege (22A, 22B) angebracht sind, insbesondere einteilig damit hergestellt bzw. gebildet sind.
5. Leitungsführungseinrichtung nach Aspekt 4, wobei
   der flexible Tragstrang (11) als Seil ausgeführt ist; und die Befestigungsvorrichtung (18) des Zentralteils (15A) in Art einer Gelenk-Klemmschelle ausgeführt ist, und ein Gelenk (24) sowie eine Spannschraube (25) umfasst, um die mindestens zwei oder genau zwei Bauteile (20A, 20B), insbesondere Klemmschalen (21A, 21B), unter Erzeugung einer Klemmkraft am Tragstrang (11) bzw. Seil zu befestigen.
6. Leitungsführungseinrichtung nach einem der Aspekte 1 bis 5, wobei der Außenteil (15B) den Zentralteil (15A) geschlossen umgibt, insbesondere einen den Zentralteil umlaufenden Ring bildet; und vorzugsweise zumindest einen Verschluss aufweist, um den Aufnahmebereich quer zur Längsrichtung zu verschließen.
7. Leitungsführungseinrichtung nach einem der Aspekte 1 bis 6, wobei eine der Anzahl radialer Stege (22A, 22B, 22C, 22D) entsprechende Anzahl Umfangselemente (17) vorgesehen ist, wobei
   - jedes Umfangselement (17) aufschwenkbar, vorzugsweise durch eine Gelenkverbindung (23), mit einem radialen Steg (22A, 22C) verbunden ist; und/oder
   - jedes Umfangselement (17) lösbar mit jeweils zumindest einem radialen Steg, vorzugsweise mit jeweils zwei radialen (22A, 22B, 22C, 22D) Stegen, verbunden ist.
8. Leitungsführungseinrichtung nach Aspekt 7, wobei jeder radialer Steg einen radial erstreckenden Abschnitt sowie zumindest einen in Umfangsrichtung erstreckenden, insbesondere einstückig mit dem radial erstreckenden Abschnitt ausgeführten, Vorsprung (27B) zum lösbaren Verbinden mit jeweils einem Umfangselement umfasst, wobei der zumindest eine Vorsprung ein Rastelement (27C) zum Verrasten mit dem Umfangselement aufweist, und wobei jedes Umfangselement (17) ein Ende aufweist, welches durch eine Schnappverbindung mit dem Vorsprung (27B) an einem radialen Steg (22B, 22D) verrastbar ist.
9. Leitungsführungseinrichtung nach Aspekt 8, wobei
   - ein erstes Ende des Umfangselements (17) einen Gelenkbereich (23A) aufweist und, vorzugsweise, in Axialrichtung beidseitig neben dem Gelenkbereich (23A) zwei Stützflächen (17A) bildet, mittels welchen das erste Ende am radialen Steg (22A; 22C) in Umfangsrichtung abstützbar ist; und/oder
   - ein zweites Ende des Umfangselements (17) eine Stützfläche (17D) aufweist, mittels welcher das zweite Ende am radialen Steg (22B; 22D) in Umfangsrichtung abstützbar ist; und/oder
   - ein zweites Ende des Umfangselements (17) eine Rastaufnahme (27A) bildet, welche mit einem Rastelement (27B) in Form eines Rastvorsprungs am weiteren radialen Steg (22B, 22D) verrastbar ist, wobei Rastaufnahme (27A) und Rastvorsprung (27B) insbesondere im Wesentlichen in Tangentialrichtung verlaufen und/oder durch Hebeln bzw. Torsion um eine Tangentialrichtung lösbar sind.
10. Leitungsführungseinrichtung nach Aspekt 9, wobei das erste Ende des Umfangselements (17) einen Gelenkbereich (23) mit einem Schwenkzapfen (23A) aufweist, welcher mit einer Schwenkaufnahme (23B) am radialen Steg (22B; 22D) schwenkbar verbunden ist, wobei das erste Ende des Umfangselements (17) eine Entriegelungsfläche (17C) bildet, die in Zusammenwirkung mit dem Steg (22A, 22C) ein Lösen des Schwenkzapfens (23A) nur in einem beschränkten Winkelbereich erlaubt.
11. Leitungsführungseinrichtung nach einem der Aspekte 9 oder 10, wobei,
   - mindestens ein erster radialer Steg (22A, 22C) jeweils beidseitig mit jeweils einem ersten Ende von zwei Umfangselementen (17) gelenkig (23) verbunden ist, und hierzu vorzugsweise zwei Schwenkaufnahmen (23B) für je ein Umfangselement (17) aufweist;
   - wobei vorzugsweise mindestens ein zweiter radialer Steg (22C, 22D) jeweils beidseitig durch eine Schnappverbindung (27A, 27B) mit jeweils einem zweiten Ende von zwei Umfangselementen (17) verrastbar ist, und hierzu vorzugsweise zwei in Umfangsrichtung erstreckenden einstückigen Vorsprünge (27B) mit jeweils einem Rastelement (27B) für je ein Umfangselement (17) aufweist.
12. Leitungsführungseinrichtung nach einem der vorstehenden Aspekte, wobei der Außenteil (15B) mindestens zwei, insbesondere mindestens drei Umfangselemente (17; 47; 57) umfasst, welche vorzugsweise lösbar, beweglich und/oder aufschwenkbar am Zentralteil (15A) gehalten sind, und einen umfänglichen ringförmigen elastischen Puffer (19) zur Stoßdämpfung umfasst, welcher außenseitig die Umfangselemente (17; 47; 57) umgibt und an den Umfangselementen (17) in Axialrichtung gehalten ist.
13. Leitungsführungseinrichtung nach Aspekt 12, wobei die Umfangselemente (17; 47; 57) außenseitig und der Puffer (19) innenseitig eine Formgebung mit ringförmiger Vertiefung und eingreifendem Vorsprung aufweisen zum Halten des Puffers in Axialrichtung.
14. Leitungsführungseinrichtung nach einem der vorstehenden Aspekte, insbesondere nach Aspekt 12 und 13, wobei einer der mindestens drei radialen Stege (42A... 42C), insbesondere ein zweiter radialer Steg (22B) mit welchem Umfangselemente verrastbar sind, einen radial vorstehenden Sicherungsbereich (29A) aufweist, an welchem der ringförmige elastische Puffer (19) befestigbar ist.
15. Leitungsführungseinrichtung nach einem der vorstehenden Aspekte 1 bis 14,
   - wobei jeder radiale Steg (22A... 22D) einteilig ausgeführt ist und/oder jedes Umfangselement (17) zwischen zwei umfänglich aufeinanderfolgenden Stegen (22A-22B) als durchgehendes Bogensegment ausgeführt ist und endseitig an diesen Stegen (22A-22B) gehalten ist; und/oder
   - wobei die radialen Stege (22A... 22D) in Umfangsrichtung gleichverteilt um eine Mittelachse angeordnet sind und/oder jedes Umfangselement (17) kreisbogenförmig ausgeführt ist und in Umfangsrichtung ein Bogenmaß von ≤ 120°, insbesondere ≤ 90°, aufweist; und/oder
   - wobei der Innendurchmesser des Außenteils (15B) ≥ 300mm beträgt; und/oder
   - wobei der Außenteil des Führungskörpers spiegelsymmetrisch relativ zu einer Ebene, die sich senkrecht zur Längsrichtung erstreckt, ausgeführt ist.
16. **Führungskörper** (14) für eine Leitungsführungseinrichtung nach einem der vorstehenden Aspekte 1 bis 15, umfassend
   - einen Zentralteil (15A) mit Befestigungsvorrichtung (18) zum Befestigen an einem Tragstrang (11), sowie
   - einen Außenteil (15B) mit mindestens einem Umfangselement (17), welches einen Aufnahmebereich (L) für Leitungen nach Außen begrenzt, aufweisen; **wobei**
   mindestens drei radiale Stege (22A...22D; 42A... 42C; 52A... 52E) am Zentralteil (15A) vorgesehen sind und den Außenteil (15B halten und vorzugsweise das mindestens eine Umfangselement (17) lösbar mit mindestens einem der radialen Stege verbunden ist.
17. Führungskörper nach Aspekt 16, aufweisend die kennzeichnenden Merkmale eines der Aspekte 2 bis 15.
18. **Leitungsführungseinrichtung** (60) zur Führung von mehreren Leitungen, wie Kabel, Schläuche, oder dgl., insbesondere für hängende Anwendungen, wie z.B. in einer Bohranlage (1) oder dgl., umfassend
   - einen zugfesten, flexiblen Tragstrang (11), wobei der Tragstrang (11) sich vorzugsweise über die Länge der Leitungsführungseinrichtung erstreckt; und
   - eine Anzahl in Längsrichtung des Tragstrangs (11) an diesem angeordnete Körper, wobei benachbarte Körper zueinander räumlich auslenkbar sind;
   wobei zumindest einige Körper als Führungskörper (14) ausgeführt sind, welche jeweils
   - einen Zentralteil (15A) mit Befestigungsvorrichtung (18) zum Befestigen am Tragstrang (11), sowie
   - einen Außenteil (15B) mit mindestens einem Umfangselement (17), welches einen Aufnahmebereich (L) für Leitungen nach Außen begrenzt, aufweisen;
   **wobei**
   in einem Längsabschnitt der Leitungsführungseinrichtung zwischen jeweils zwei Führungskörpern (14) mindestens ein Abstandskörper (70) am Tragstrang (11) vorgesehen ist, wobei der Abstandskörper (70) einen Abstand zwischen den Zentralteilen (15A) der zwei Führungskörper (14) vorgibt und von den Führungskörpern (14) verschieden gestaltet ist, insbesondere mit gegenüber den Führungskörpern (14) reduziertem Außendurchmesser und/oder derart, dass die Außenteile (15B) der zwei Führungskörper (14) bei vollständig ausgelenkter Relativstellung aneinander anliegen können.
19. Leitungsführungseinrichtung (60) nach Aspekt 18, wobei in dem Längsabschnitt jeder n-te Körper, mit n ≥ 2, als Führungskörper (14) ausgeführt ist und/oder zwischen zwei Führungskörpern (14) jeweils genau ein Abstandskörper (70) vorgesehen ist, wobei vorzugsweise Führungskörper (14) mit Abstandskörpern (70) alternierend vorgesehen sind.
20. Leitungsführungseinrichtung (60) nach Aspekt 18 oder 19, wobei die Abstandskörper (70) mit einer kompakten Außenkontur im Querschnitt senkrecht zur Längsrichtung ausgeführt sind, welche im Wesentlichen innerhalb der durch den Zentralteil (15A) der Führungskörper (14) definierten radial inneren Begrenzung eines Aufnahmebereichs (L) für Leitungen liegt.
21. Leitungsführungseinrichtung (60) nach Aspekt 18, 19 oder 20, wobei jeder Abstandskörper (70) zwei angrenzende Körper räumlich auslenkbar, insbesondere gelenkig verbindet, wobei vorzugsweise jeder Abstandskörper (70) zur gelenkigen Verbindung mit Führungskörpern (14) zwei stirnseitig gegenüberliegende Gelenkbereiche (76A, 76B) aufweist, welche zu entsprechenden Gelenkbereichen (26A, 26B) der Zentralteile (15A) der Führungskörper (14) korrespondierend ausgeführt sind, und insbesondere mit diesen axial lösbar verbindbar sind.
22. Leitungsführungseinrichtung (60) nach einem der Aspekte 18 bis 21, insbesondere nach Aspekt 21, wobei die Abstandskörper (70) in Axialrichtung so dimensioniert sind, dass eine durchgehend gleichbleibende Kettenteilung (T) in dem Längsabschnitt erzielt wird.
23. Leitungsführungseinrichtung (60) nach einem der Aspekte 18 bis 22, insbesondere nach Aspekt 22, wobei die Außenteile (15B) eine kreisringförmige Außenkontur bilden und
   - der maximale Außendurchmesser der Abstandskörper (70) weniger als 33% des Außendurchmessers der Außenteile (15B) der Führungskörper (14) beträgt, insbesondere ≤ 30%; und/oder
   - der Außendurchmesser der Außenteile (15B) der Führungskörper (14) mindestens das 2,5-fache der Kettenteilung, insbesondere ≥ 2,8-fache der Kettenteilung beträgt; und/oder
   - der Außendurchmesser der Außenteile (15B) > 300mm beträgt.
24. Leitungsführungseinrichtung (60) nach einem der Aspekte 18 bis 23, wobei jeder Abstandskörper (70) eine axiale Durchgangsöffnung für den Tragstrang bildet und mehrteilig ausgeführt ist, insbesondere mit mindestens zwei Bauteilen (71, 72) zur form- und/oder kraftschlüssigen Befestigung am Tragstrang.
25. Leitungsführungseinrichtung (60) nach Aspekt 24, wobei jeder Abstandskörper (70) in Art einer Gelenk-Klemmschelle ausgeführt ist, und ein Klemmgelenk (74) sowie eine Spannschraube (75) umfasst, um die zwei schalenartigen Bauteile (71, 72) unter Erzeugung einer Klemmkraft am Tragstrang (11) zu befestigen.
26. Leitungsführungseinrichtung (60) nach Aspekt 24 oder 25, wobei jeder Abstandskörper (70) im Wesentlichen aus zwei länglichen halbschalenartigen Bauteilen (71, 72) besteht, wobei die Bauteile insbesondere mit störkantenfreier Außenkontur und/oder ohne radial vorstehende Stege ausgeführt sind.

## Patentansprüche

1. **Leitungsführungseinrichtung** (60) zur Führung von mehreren Leitungen, wie Kabel oder Schläuche, insbesondere für hängende Anwendungen, wie z.B. in einer Bohranlage (1) oder dgl., umfassend
- einen zugfesten, flexiblen Tragstrang (11), wobei der Tragstrang (11) sich vorzugsweise über die Länge der Leitungsführungseinrichtung erstreckt; und
- eine Anzahl in Längsrichtung des Tragstrangs (11) an diesem angeordnete Körper, wobei benachbarte Körper zueinander räumlich auslenkbar sind;
wobei zumindest einige Körper als Führungskörper (14) ausgeführt sind, welche jeweils
- einen Zentralteil (15A) mit Befestigungsvorrichtung (18) zum Befestigen am Tragstrang (11), sowie
- einen Außenteil (15B) mit mindestens einem Umfangselement (17), welches einen Aufnahmebereich (L) für Leitungen nach Außen begrenzt, aufweisen;
**dadurch gekennzeichnet, dass**
in einem Längsabschnitt der Leitungsführungseinrichtung zwischen jeweils zwei Führungskörpern (14) mindestens ein Abstandskörper (70) am Tragstrang (11) vorgesehen ist, wobei der Abstandskörper (70) einen Abstand zwischen den Zentralteilen (15A) der zwei Führungskörper (14) vorgibt und von den Führungskörpern (14) verschieden gestaltet ist, wobei in dem Längsabschnitt jeder n-te Körper, mit n ≥ 2, als Führungskörper (14) ausgeführt ist; und
wobei jeder Abstandskörper (70) zwei angrenzende Körper räumlich auslenkbar und gelenkig verbindet, wobei jeder Abstandskörper (70) zur gelenkigen Verbindung mit Führungskörpern (14) zwei stirnseitig gegenüberliegende Gelenkbereiche (76A, 76B) aufweist, welche zu entsprechenden Gelenkbereichen (26A, 26B) der Zentralteile (15A) der Führungskörper (14) korrespondierend ausgeführt sind.

2. Leitungsführungseinrichtung (60) nach Anspruch 1, **dadurch gekennzeichnet, dass** zwischen zwei Führungskörpern (14) jeweils genau ein Abstandskörper (70) vorgesehen ist, wobei vorzugsweise Führungskörper (14) mit Abstandskörpern (70) alternierend vorgesehen sind.

3. Leitungsführungseinrichtung (60) nach Anspruch 1 oder 2, **dadurch gekennzeichnet, dass** die Abstandskörper (70) mit einer kompakten Außenkontur im Querschnitt senkrecht zur Längsrichtung ausgeführt sind, welche im Wesentlichen innerhalb der durch den Zentralteil (15A) der Führungskörper (14) definierten radial inneren Begrenzung eines Aufnahmebereichs (L) für Leitungen liegt.

4. Leitungsführungseinrichtung (60) nach einem der Ansprüche 1 bis 3, **dadurch gekennzeichnet, dass** die stirnseitig gegenüberliegende Gelenkbereiche (76A, 76B) des jeweiligen Abstandskörpers (70) mit entsprechenden Gelenkbereichen (26A, 26B) der Zentralteile (15A) der Führungskörper (14) axial lösbar verbindbar sind.

5. Leitungsführungseinrichtung (60) nach einem der Ansprüche 1 bis 4, insbesondere nach Anspruch 4, **dadurch gekennzeichnet, dass** die Abstandskörper (70) in Axialrichtung so dimensioniert sind, dass eine durchgehend gleichbleibende Kettenteilung (T) in dem Längsabschnitt erzielt wird.

6. Leitungsführungseinrichtung (60) nach einem der Ansprüche 1 bis 5, insbesondere nach Anspruch 5, **dadurch gekennzeichnet, dass** die Außenteile (15B) eine kreisringförmige Außenkontur bilden und
- der maximale Außendurchmesser der Abstandskörper (70) weniger als 33% des Außendurchmessers der Außenteile (15B) der Führungskörper (14) beträgt, insbesondere ≤ 30%; und/oder
- der Außendurchmesser der Außenteile (15B) der Führungskörper (14) mindestens das 2,5-fache der Kettenteilung, insbesondere ≥ 2,8-fache der Kettenteilung beträgt; und/oder
- der Außendurchmesser der Außenteile (15B) > 300mm beträgt.

7. Leitungsführungseinrichtung (60) nach einem der Ansprüche 1 bis 6, **dadurch gekennzeichnet, dass** jeder Abstandskörper (70) eine axiale Durchgangsöffnung für den Tragstrang bildet und mehrteilig ausgeführt ist.

8. Leitungsführungseinrichtung (60) nach Anspruch 7, **dadurch gekennzeichnet, dass** jeder Abstandskörper (70) in Art einer Gelenk-Klemmschelle ausgeführt ist, und ein Klemmgelenk (74) sowie eine Spannschraube (75) umfasst, um die zwei schalenartigen Bauteile (71, 72) unter Erzeugung einer Klemmkraft am Tragstrang (11) zu befestigen.

9. Leitungsführungseinrichtung (60) nach Anspruch 7 oder 8, **dadurch gekennzeichnet, dass** jeder Abstandskörper (70) im Wesentlichen aus zwei länglichen halbschalenartigen Bauteilen (71, 72) besteht, wobei die Bauteile insbesondere mit störkantenfreier Außenkontur und/oder ohne radial vorstehende Stege ausgeführt sind.

10. Leitungsführungseinrichtung (60) nach einem der vorstehenden Ansprüche, **dadurch gekennzeichnet, dass** der Abstandskörper (70) mit gegenüber den Führungskörpern (14) reduziertem Außendurchmesser gestaltet ist, und/oder derart gestaltet ist, dass die Außenteile (15B) der zwei Führungskörper (14) bei vollständig ausgelenkter Relativstellung aneinander anliegen können.

11. Leitungsführungseinrichtung (60) nach einem der vorstehenden Ansprüche, **dadurch gekennzeichnet, dass** jeder Abstandskörper (70) mit mindestens zwei Bauteilen (71, 72) zur form- und/oder kraftschlüssigen Befestigung am Tragstrang ausgeführt ist.

12. Leitungsführungseinrichtung (60) nach einem der vorstehenden Ansprüche, **dadurch gekennzeichnet, dass** der Zentralteil (15A) eine axiale Durchgangsöffnung (16) für den Tragstrang (11) bildet.

13. Leitungsführungseinrichtung (60) nach Anspruch 12, **dadurch gekennzeichnet, dass** der Zentralteil (15A) mehrteilig ausgeführt ist, wobei der Zentralteil (15A) zum Befestigen am Tragstrang (11) vorzugsweise mindestens zwei oder genau zwei Bauteile (20A, 20B), insbesondere Klemmschalen, aufweist, welche zur formschlüssigen und/oder kraftschlüssigen Befestigung am Tragstrang (11) ausgeführt sind und die Durchgangsöffnung (16) begrenzen.

14. Leitungsführungseinrichtung nach einem der vorstehenden Ansprüche, **dadurch gekennzeichnet, dass** der Außenteil (15B) mindestens zwei Umfangselemente (17; 47; 57) umfasst, welche vorzugsweise lösbar, beweglich und/oder aufschwenkbar am Zentralteil (15A) gehalten sind, und einen umfänglichen ringförmigen elastischen Puffer (19) zur Stoßdämpfung umfasst, welcher außenseitig die Umfangselemente (17; 47; 57) umgibt und an den Umfangselementen (17) in Axialrichtung gehalten ist.

15. Leitungsführungseinrichtung nach Anspruch 14, **dadurch gekennzeichnet, dass** die Umfangselemente (17; 47; 57) außenseitig und der Puffer (19) innenseitig eine Formgebung mit ringförmiger Vertiefung und eingreifendem Vorsprung aufweisen zum Halten des Puffers in Axialrichtung.
